# EUROPÄISCHE PATENTANMELDUNG

(11) **EP 0 805 535 A2**
(43) Veröffentlichungstag der Anmeldung: **05.11.1997**
(21) Anmeldenummer: 97250141.5
(22) Anmeldetag: 24.04.1997
(51) Int. Cl.: H02B 13/035

(54) **Ein- oder mehrpolige metall-gekapselte, geschottete oder gasisolierte Schaltfelder mit Sichtfester**

(30) Priorität: 29.04.1996 DE 29608127 U
(71) Anmelder: SIEMENS AKTIENGESELLSCHAFT, 80333 München (DE)
(72) Erfinder: Markarians, Aram, Ter, 91058 Erlangen (DE)

(57) **Zusammenfassung**

Die Erfindung betrifft ein- oder mehrpolige, metallgekapselte, geschottete oder gasisolierte Schaltfelder, die mittels Dreistellungsschalter mit Trenner- und Erderfunktion mit oder ohne Vakuumschaltröhren ausgebildeten Leistungsschaltern in Verbindung stehen, die jeweils in Sammelschienen-Gehäusen oder getrennten Trenner-Gehäusen angeordnet sind, wobei die Gehäuse im Umfangsbereich mit gasdicht verschlossenen Sichtfenstern versehen sind, die beispielsweise mittels Endoskopgeräte die Ansicht der jeweiligen Schaltstellungen der Kontakte des Dreistellungsschalters ermöglichen.

Die Sichtfenster sind im Gehäuse (TG1, TG 3, TG3) jedem Trenner- bzw. Erderkontakt zugeordnet und jeweils mit einem Führungsrohr (FR1, FR2, FR3) versehen, das eine von außen her zugängliche verschließbare Führungsöffnung (FO1, FO2, FO3) enthält.

## Beschreibung

Die Erfindung betrifft ein- oder mehrpolige, metallgekapselte, geschottete oder gasisolierte Schaltfelder, die mittels Dreistellungsschalter mit Trenner- und Erderfunktion mit oder ohne Vakuumschaltröhren ausgebildeten Leistungsschaltern in Verbindung stehen, die jeweils in Sammelschienen-Gehäusen oder getrennten Trenner-Gehäusen angeordnet sind, wobei die Gehäuse im Umfangsbereich mit gasdicht verschlossenen Sichtfenstern versehen sind, die beispielsweise mittels Endoskopgeräte die Ansicht der jeweiligen Schaltstellungen der Kontakte des Dreistellungsschalters ermöglichen.

Für derartig definierte Schaltfelder ist es bekannt, die Trenner- und Erder-Strecken des Dreistellungsschalters beispielweise mit Endoskopgeräten von außen her zu betrachten. Hierzu ist es notwendig, einen flexiblen Schlauch des Endoskopgerätes, der im freien Endbereich mit der Optiklinse und der Kaltlichtquelle ausgestattet ist, vor dem Sichtfenster des jeweiligen Schaltfeldes zu positionieren bzw. am Gehäuse des Trennerkontaktes anzubringen. Erschwerend kommt noch hinzu, daß die Zwischenräume zwischen mehreren Schaltfeldern sehr eng sind, und damit die zielgerichtete Betrachtung der Kontaktstrecken zusätzlich erschwert ist.

Die der Erfindung zugrundeliegende Aufgabe besteht darin, die Handhabung zur Betrachtung der Kontakte bei derartigen Schaltfeldern erheblich zu verbessern und insbesondere die zielgerichtete Betrachtung der Kontaktstellungen in einfacher Weise durchführen zu können. Erfindungsgemäß wird dies durch die Merkmale
1.1 die Sichtfenster sind im Gehäuse einem jeweiligen Trenner- bzw. Erderkontakt zugeordnet und mit einem jeweiligen Führungsrohr versehen,
1.2 die Führungsrohre sind annähernd gradlinig zur Frontseite des jeweiligen Schaltfeldes derart nach außen geführt, daß das Endoskopgerät zur Sichtbarmachung der Schalterstellungen in eine von außen her zugängliche Führungsöffnung einführbar ist,
1.3 die Führungsöffnungen sind durch eine Schranktür des jeweiligen Schaltfeldes verschließbar,
erreicht.

Mit dem Vorsehen der Führungsrohre vor den Sichtfenstern der Schaltfelder ist erreicht, daß zur Betrachtung der jeweiligen Kontaktstellungen die Endoskopgeräte oder andere Betrachtungsgeräte in die jeweilige von außen her zugängliche Führungsöffnung eingeführt und ohne Komplikationen direkt an das Sichtfenster der Schaltfelder positioniert werden können. Durch die geradlinige Anordnung der Führungsrohre innerhalb der Schaltfelder ist gewährleistet, daß die Optiklinse mit der integrieten Kaltlichtquelle oder auch einer getrennt angebrachten Lichtquelle ohne Schwierigkeiten an die Sichtfenster gelangen. Da die Führungsrohre an der Frontseite des jeweiligen Schaltfeldes mit den Führungsöffnungen enden, lassen sich die Endoskopgeräte in einfacher Weise zur Untersuchung der Schaltkontakte von außen an die Sichtfenster heranführen.

Eine vorteilhafte Ausgestaltung der Erfindung sieht die Merkmale
2.1 die Führungsrohre sind aus metallischen Material, vorzugsweise aus Kupfer gebildet,
2.2 die Führungsrohre weisen eine Profilstruktur zur Führung der Optiklinse und der Kaltlichtquelle des Endoskopgerätes (ED) auf,
vor.

Die Profilstruktur der Führungsrohre gewährleistet eine ordnungsgemäße Führung der Endoskopgeräte innerhalb der Schaltfelder. Aus Sicherheitsgründen können so die metallischen Führungsrohre ständig auf Erdpotential liegen, so daß Entladungsvorgänge bei der Handhabung der Endoskopgeräte ausgeschlossen sind.

Eine weitere vorteilhafte Ausgestaltung der Erfindung ist durch die Merkmale
3.1 die Führungsrohre sind aus flexiblen Kunststoff, vorzugsweise aus PVC-Schlauch, gebildet,
3.2 die Führungsrohre weisen eine Profilstruktur zur Führung der Optiklinse und der Kaltlichtquelle des Endoskopgerätes auf,
gegeben.
Mit dem flexiblen Kunststofführungsrohr, das ebenfalls profilstrukturiert sein kann, ist eine sehr kostengünstige Lösung dieses Problems ohne Sicherheitseinschränkung realisiert.

Eine weitere vorteilhafte Ausgestaltung der Erfindung sieht das Merkmal
4.1 die Führungsrohre enden mit ihren Führungsöffnungen innerhalb des Niederspannungsteils des Schaltfeldes,
vor.
Mit dieser Maßnahme ist erreicht, daß die Hilfsspannung für das Endoskopgerät direkt aus dem Niederspannungsteil des Schaltfeldes bezogen werden kann, so daß zusätzliche Batterien sowie Ladegeräte und Haltegurte für den wirkungsvollen Einsatz dieser Endoskopgeräte entfallen.

Die Erfindung wird durch ein figürlich dargestelltes Ausführungsbeispiel erläutert, wobei das einpolige Schaltfeld nur die für die Erfindung wesentlichen Gegenstände zeigt.

Im Ausführungsbeispiel ist ein einpoliges, metallgekapseltes und geschottetes Schaltfeld SF dargestellt, das für die drei elektrischen Phasen die Sammelschienen-Gehäuse SG1, SG2 und SG3 enthält. Unterhalb der Sammelschienen-Gehäuse SG1, SG2 und SG3 sind die jeweiligen Trenner-Gehäuse TG1, TG2 und TG3 angeordnet, in denen die zu beobachteten Kontaktbereiche des Dreistellungsschalters über nicht dargestellte Sichtfenster von außen her ermöglicht ist. Weiterhin ist ersichtlich, daß jedem Trenner-Gehäuse TG1, TG2 und TG3 ein entsprechendes Führungsrohr FR1, FR2 und FR3 zugeordnet ist, das jeweils im Frontbereich des Schaltfeldes SF im sogenannten Niederspannungsteil mit der entsprechenden Führungsöffnung FO1, FO2 und FO3 endet. Im Betriebszustand ist die Schranktür ST des Schaltfeldes SF geschlossen, so daß die Führungsöffnungen FO1, FO2 und FO3 von außen her nicht zugänglich sind. Zur Betrachtung der Kontaktstellungen innerhalb der Trenner-gehäuse ist das Endoskopgerät ED mit seiner ebenfalls nicht dargestellten Optiklinse mit integrierter Kaltlichtquelle direkt in die jeweilige Führungsöffnung FO1, FO2 und FO3 des Schaltfeldes SF einzuführen und somit direkt vor die nicht dargestellten Sichtfenster der entsprechenden Trennergehäuse TG1, TG2 und TG3 zu positionieren. Durch die Führungsrohre SR1, FR2 und FR3, die im profilierten Zustand das Endoskopgerät ED in sehr einfacher Weise innerhalb des Schaltfeldes SF führen, sind diese Beobachtungsvorgänge ohne größeren Zeitaufwand in einfacher Weise exakt durchzuführen.

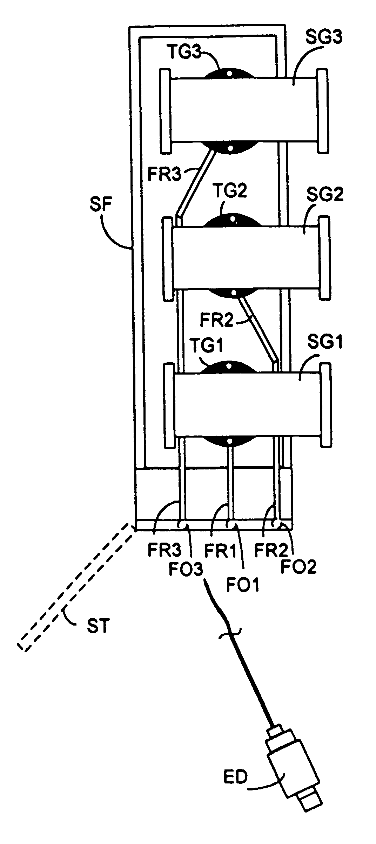

## Patentansprüche

1. Ein- oder mehrpolige, metallgekapselte, geschottete oder gasisolierte Schaltfelder, die mittels Dreistellungsschalter mit Trenner- und Erderfunktion mit oder ohne Vakuumschaltröhren ausgebildeten Leistungsschaltern in Verbindung stehen, die jeweils in Sammelschienen-Gehäusen oder getrennten Trenner-Gehäusen angeordnet sind, wobei die Gehäuse im Umfangsbereich mit gasdicht verschlossenen Sichtfenstern versehen sind, die beispielsweise mittels Endoskopgeräte die Ansicht der jeweiligen Schaltstellungen der Kontakte des Dreistellungsschalters ermöglichen,
**gekennzeichnet durch** die Merkmale
1.1 die Sichtfenster sind im Gehäuse (TG1, TG2, TG3)einem jeweiligen Trenner- bzw. Erderkontakt zugeordnet und mit einem jeweiligen Führungsrohr (FR1, FR2, FR3) versehen,
1.2 die Führungsrohre (FR1, FR2, FR3) sind annähernd gradlinig zur Frontseite des jeweiligen Schaltfeldes (SF) derart nach außen geführt, daß das Endoskopgerät (ED) zur Sichtbarmachung der Schalterstellungen in eine von außen her zugängliche Führungsöffnung (FO1, FO2, FO3) einführbar ist,
1.3 die Führungsöffnungen (FO1, FO2, FO3) sind durch eine Schranktür (ST) des jeweiligen Schaltfeldes (SF) verschließbar.

2. Ein- oder mehrpolige, metallgekapselte, geschottete oder gasisolierte Schaltfelder nach Anspruch 1,
**gekennzeichnet durch** die Merkmale
2.1 die Führungsrohre (FR1, FR2, FR3) sind aus metallischen Material, vorzugsweise aus Kupfer gebildet,
2.2 die Führungsrohre (FR1, FR2, FR3) weisen eine Profilstruktur zur Führung der Optiklinse und der Kaltlichtquelle des Endoskopgerätes (ED) auf.

3. Ein- oder mehrpolige, metallgekapselte, geschottete oder gasisolierte Schaltfelder nach Anspruch 1,
**gekennzeichnet durch** die Merkmale
3.1 die Führungsrohre (FR1, FR2, FR3) sind aus flexiblen Kunststoff, vorzugsweise aus PVC-Schlauch, gebildet,
3.2 die Führungsrohre (FR1, FR2, FR3) weisen eine Profilstruktur zur Führung der Optiklinse und der Kaltlichtquelle des Endoskopgerätes (ED) auf.

4. Ein- oder mehrpolige, metallgekapselte, geschottete oder gasisolierte Schaltfelder nach einem der Ansprüche 1 bis 3,
**gekennzeichnet durch** das Merkmal
4.1 die Führungsrohre (FR1, FR2, FR3) enden mit ihren Führungsöffnungen (FO1, FO2, FO3) innerhalb des Niederspannungsteils des Schaltfelde (SF).
